(19) Europäisches Patentamt
European Patent Office
Office européen des brevets

(11) EP 2 893 583 B1

(12) # FASCICULE DE BREVET EUROPEEN

(45) Date de publication et mention de la délivrance du brevet:
**05.10.2016 Bulletin 2016/40**

(21) Numéro de dépôt: **13774727.5**

(22) Date de dépôt: **05.09.2013**

(51) Int Cl.:
***H01M 4/86*** *(2006.01)* ***H01M 4/88*** *(2006.01)*
***H01M 4/92*** *(2006.01)* ***C09D 11/106*** *(2014.01)*
*H01M 8/1018* *(2016.01)*

(86) Numéro de dépôt international:
**PCT/FR2013/052046**

(87) Numéro de publication internationale:
**WO 2014/044947 (27.03.2014 Gazette 2014/13)**

(54) **FORMULATION D'UNE COUCHE ACTIVE AUX PERFORMANCES AMELIORÉES**

FORMULIERUNG EINER AKTIVEN SCHICHT MIT VERBESSERTER LEISTUNG

FORMULATION OF AN ACTIVE LAYER HAVING IMPROVED PERFORMANCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.09.2012 FR 1258331**

(43) Date de publication de la demande:
**15.07.2015 Bulletin 2015/29**

(73) Titulaire: **Commissariat à l'Énergie Atomique et aux Énergies Alternatives**
**75015 Paris (FR)**

(72) Inventeurs:
- **TARD, Julien**
  **38070 Saint Quentin Fallavier (FR)**
- **PAUCHET, Joël**
  **38410 Saint Martin D'uriage (FR)**
- **VINCENT, Rémi**
  **38000 Grenoble (FR)**

(74) Mandataire: **Cabinet Laurent & Charras**
**Le Contemporain**
**50 Chemin de la Bruyère**
**69574 Dardilly Cedex (FR)**

(56) Documents cités:
**EP-A1- 1 336 996** **WO-A2-2006/029185**
**JP-A- 2006 286 330** **JP-A- 2011 113 739**

- **ZALUSKI AND G XU C: "Blends of Nafion and Dow Perfluorosulfonated Ionomer Membranes", MACROMOLECULES, AMERICAN CHEMICAL SOCIETY, WASHINGTON, DC; US, vol. 27, no. 23, 1 janvier 1994 (1994-01-01), pages 6750-6754, XP002357596, ISSN: 0024-9297, DOI: 10.1021/MA00101A012**
- **CHAO LEI ET AL: "Low equivalent weight short-side-chain perfluorosulfonic acid ionomers in fuel cell cathode catalyst layers", JOURNAL OF POWER SOURCES, ELSEVIER SA, CH, vol. 196, no. 15, 12 mars 2011 (2011-03-12), pages 6168-6176, XP028216007, ISSN: 0378-7753, DOI: 10.1016/J.JPOWSOUR.2011.03.024 [extrait le 2011-03-22]**
- **STASSI A ET AL: "Performance comparison of long and short-side chain perfluorosulfonic membranes for high temperature polymer electrolyte membrane fuel cell operation", JOURNAL OF POWER SOURCES, ELSEVIER SA, CH, vol. 196, no. 21, 17 décembre 2010 (2010-12-17), pages 8925-8930, XP028270187, ISSN: 0378-7753, DOI: 10.1016/J.JPOWSOUR.2010.12.084 [extrait le 2011-01-08]**
- **PERON J ET AL: "Fuel cell catalyst layers containing short-side-chain perfluorosulfonic acid ionomers", JOURNAL OF POWER SOURCES, ELSEVIER SA, CH, vol. 196, no. 1, 1 janvier 2011 (2011-01-01), pages 179-181, XP027261319, ISSN: 0378-7753 [extrait le 2010-06-23]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

(Cont. page suivante)

• **DANIEL BRANDELL ET AL: "Molecular dynamics studies of the Nafion(R), Dow(R) and Aciplex(R) fuel-cell polymer membrane systems", JOURNAL OF MOLECULAR MODELING, SPRINGER VERLAG, DE, vol. 13, no. 10, 31 juillet 2007 (2007-07-31), pages 1039-1046, XP019545082, ISSN: 0948-5023, DOI: 10.1007/S00894-007-0230-7**

## Description

### DOMAINE DE L'INVENTION

La présente invention se situe dans le domaine des dispositifs électrochimiques, en particulier des piles à combustible, notamment des piles à membrane échangeuse de protons mieux connues sous l'expression anglo-saxonne « *Proton Exchange Membrane Fuel Cell* » (PEMFC).

Plus précisément, l'invention se rapporte à la mise en oeuvre d'un mélange d'ionomères perfluorosulfonés (PFSA) pour la fabrication des couches catalytiques de ces piles, permettant d'augmenter significativement leurs performances.

### ETAT DE LA TECHNIQUE

Le principe de fonctionnement des piles à combustible à membrane échangeuse de protons (PEMFC) repose sur la conversion de l'énergie chimique en énergie électrique par réaction catalytique entre un combustible, par exemple de l'hydrogène, et un comburant, par exemple l'oxygène.

Les assemblages membrane-électrodes (AME), appelés communément coeurs de pile, constituent les éléments de base des PEMFC. Comme illustré à la figure 1, l'AME est généralement formée d'une membrane polymère (électrolyte, 3) au contact d'une couche catalytique (électrodes, 2) de part et d'autre. Les électrodes, appelées anode et cathode respectivement, sont donc séparées par l'électrolyte qui est un milieu isolant électronique, mais conducteur protonique. Des collecteurs de courant (1) assurent le transfert des électrons à la surface externe des électrodes. En outre, des couches de diffusion gazeuse sont disposées de part et d'autre de l'AME pour assurer la conduction électrique, la répartition homogène des gaz réactifs et l'évacuation de l'eau produite.

Dans le cas des piles à combustible à membrane échangeuse de protons, l'électrolyte est généralement une membrane constituée d'un polymère échangeur cationique, tel que le Nafion® (Dupont) ou l'Aquivion® (Solvay).

Le combustible utilisé dans les piles à combustible à membrane échangeuse de protons peut être un gaz, comme l'hydrogène, ou un liquide comme par exemple un alcool, notamment l'éthanol, le méthanol ou encore l'éthylène glycol.

Les réactions suivantes, données à titre d'exemple, illustrent les réactions électrochimiques ayant lieu aux électrodes dans le cas où le combustible et le comburant sont respectivement l'hydrogène et l'oxygène :

Anode:

$$H_2 \rightarrow 2H^{+}- + 2e^{-} \qquad (1)$$

Cathode :

$$O_2 + 4H^{+} + 4e^{-} \rightarrow 2H_2O \qquad (2)$$

$$E^{\circ}_{anode} = 0\ V_{/ENH}$$

$$E^{\circ}_{cathode} = 1{,}23\ V_{/ENH}$$

Dans ce cas, la réaction globale est donc la suivante :

$$H_2 + \frac{1}{2} O_2 \rightarrow H_2O$$

$$E^{\circ}_{eq} = E^{\circ}_{cathode} - E^{\circ}_{anode} = 1{,}23\ V$$

La force électromotrice aux bornes de la pile est donc de 1,23V dans les conditions standards.

A l'anode, la décomposition de l'hydrogène adsorbé sur le catalyseur produit des protons $H^+$ et des électrons

$e^-$. Les protons traversent ensuite la membrane polymérique avant de réagir avec l'oxygène à la cathode. La réaction des protons avec l'oxygène à la cathode conduit à la formation d'eau et à la production de chaleur.

Ces réactions électrochimiques sont cinétiquement favorisées par la présence d'un catalyseur constituant les électrodes. Plusieurs matériaux peuvent être utilisés selon le type de réaction et de combustible, mais le platine s'avère être le catalyseur le plus efficace pour la plupart des réactions et des combustibles.

Comme déjà indiqué, le catalyseur peut se présenter sous la forme de couches catalytiques, qui sont généralement faites de nanoparticules de platine supportées sur des agrégats de carbone. Le catalyseur peut être uniformément déposé à l'aide d'une encre catalytique sur la surface de la membrane ou sur la couche de diffusion. Cette encre catalytique est composée notamment du catalyseur supporté sur du carbone (carbone platiné), un liquide porteur et un polymère conducteur protonique. Ce dernier est en général de même nature que l'électrolyte.

Le polymère conducteur protonique joue principalement un rôle dans les performances de la cellule, puisque c'est lui qui détermine la conductivité protonique de la cellule. Il s'agit d'un ionomère, c'est-à-dire d'un polymère possédant un groupe ionisé permettant le transport de charge.

Initialement, ces ionomères étaient des phénols sulfonés, puis des polymères polystyrène sulfonique acide, plus résistants mécaniquement. Aujourd'hui, les matériaux acide perfluorosulfoné ou acide sulfonique perfluoré (PFSA pour « *PerFlatro Sulfonic Acid* ») sont largement utilisés dans les piles à combustible actuelles, en raison de leurs bonnes résistances chimique et mécanique.

Les PFSA sont des ionomères dérivés de l'acide perfluorosulfoné, c'est-à-dire comprenant des groupements sulfonates $SO_3^-$. En outre, il s'agit de polymères fluorés.

Cette famille d'ionomères regroupe un certain nombre de composés, qui diffèrent par une chimie légèrement différente. Des matériaux PFSA sont commercialisés sous les noms de Nafion® (Dupont), Aquivion® (Solvay), Flemion® (Asahi Glass Company) ou encore Aciplex® (Asahi Chemical Company). A titre d'exemple, la structure partielle de l'Aquivion® (Solvay) est illustrée à la figure 2.

Comme il ressort, ces polymères diffèrent essentiellement par la structure chimique de leurs chaînes latérales ou pendantes, à savoir les chaînes greffées sur la chaîne principale du polymère (ou ramifications).

Ainsi, les chaînes latérales ou pendantes de l'Aquivion® sont plus courtes (« short side-chain ») que celles du Nafion® (« long side-chain »). Cela se traduit par un taux de cristallinité et une température de transition vitreuse plus élevés.

De plus, l'Aquivion® présente une masse équivalente plus faible. Les groupements hydrophiles sont donc plus nombreux pour une même masse, ce qui lui confère un caractère hydrophile plus marqué. Cette propriété permet une meilleure conductivité des protons, du fait d'un plus grand nombre de sites sulfonés, ce qui améliore les propriétés à basse humidité.

Les caractéristiques chimiques de ces ionomères PFSA ont donc des répercussions sur le fonctionnement des piles qui les contiennent.

Ainsi, le Nafion® conduit à de bonnes performances quelle que soit l'humidité relative des gaz. L'Aquivion®, en revanche, présente de meilleures performances que le Nafion® à faible humidité relative, ce qui peut le rendre intéressant dans ces conditions. Par contre, l'utilisation de l'Aquivion® en tant que polymère conducteur protonique pose problème à forte humidité, avec des chutes de performances importantes en activation. Il a également été montré par Arico et al. (« High temperature operation of a solid polymer electrolyte fuel cell stack based on a new ionomer membrane », Fuel Cells 10, 2010, n°06, 1013-1023) que l'Aquivion® est meilleur que le Nafion® à des températures moyennes, de l'ordre de 100-110°C.

Le brevet EP1336996 décrit une électrode d'une pile à combustible comprenant un mélange de deux ionomères perfluorosulfonés.

Il ressort de ce qui précède que les différents PFSA actuellement disponibles présentent chacun des avantages et des inconvénients. Un autre paramètre important susceptible de freiner leur utilisation est lié à leur coût.

Il existe donc un besoin évident de proposer de nouveaux polymères conducteurs protoniques, utilisables dans le cadre des PEMFC, notamment au niveau de leurs couches catalytiques.

## EXPOSE DE L'INVENTION

La présente invention repose sur la mise en évidence par le Demandeur que de façon surprenante, les performances globales d'une pile à combustible à membrane échangeuse de protons peuvent être améliorées par la mise en oeuvre d'une couche active comprenant un mélange d'au moins deux ionomères de type PFSA selon la revendication 1. Ainsi et selon un premier aspect, la présente invention concerne une couche active pour dispositif électrochimique comprenant au moins deux ionomères perfluorosulfonés.

Un dispositif électrochimique privilégié selon l'invention est une pile à combustible, avantageusement une pile à combustible à membrane échangeuse de protons ou PEMFC.

Dans le cadre de l'invention, on appelle couche active ou couche catalytique, la couche comprenant le catalyseur. Dans le contexte d'une pile à combustible, la couche active ou catalytique sert d'électrode, aussi bien de cathode que d'anode. Selon un mode de réalisation privilégié, la couche active selon l'invention est utilisée comme cathode.

De manière avantageuse, le catalyseur est du platine. En outre, le catalyseur se présente avantageusement sous forme de particules voire de nanoparticules, notamment de platine. Selon un autre mode de réalisation privilégié, le catalyseur est supporté sur du carbone ou des agrégats de carbone. Le catalyseur peut donc être du carbone platiné.

De manière caractéristique selon l'invention, le catalyseur est donc associé à au moins deux ionomères perfluorosulfonés dans la couche active.

Au sens de l'invention, un ionomère perfluorosulfoné s'entend comme un polymère perfluoré porteur de fonctions acide sulfonique ou PFSA, comme défini plus haut.

Selon l'invention, il s'agit donc d'utiliser au moins deux polymères de nature différente et donc de structure chimique différente. Il peut bien sûr être envisagé d'en associer un nombre supérieur.

En particulier et de manière privilégiée, les aux moins deux polymères se distinguent par la nature ou structure de leur chaîne latérale ou pendante, avantageusement par la longueur de celle-ci. Pour évaluer la « longueur », il peut être pris en compte le nombre total d'atomes constituant cette chaîne, ou éventuellement le nombre d'atomes de carbone de cette chaîne.

Ainsi et de manière avantageuse, le premier polymère présente une chaîne pendante plus longue que le second. En d'autres termes, le deuxième ionomère perfluorosulfoné présente une chaîne pendante plus courte que le premier ionomère perfluorosulfoné.

Selon ce mode de réalisation, le premier ionomère perfluorosulfoné possède avantageusement une chaîne latérale longue (« *long side-chain* »).

Un ionomère particulièrement adapté est un dérivé tétrafluoroéthylène sulfoné, par exemple commercialisé sous le nom de Nafion® (Dupont). A titre d'exemple, le produit Nafion® D2020 possédant un numéro CAS 31175-20-9 peut être mis en oeuvre dans le cadre de la présente invention mais il en existe d'autres.

La structure partielle d'un tel ionomère est illustrée à la figure 2 et se caractérise par des chaînes pendantes possédant 5 atomes de carbone. Ainsi et de manière avantageuse selon l'invention, le premier ionomère perfluorosulfoné possède une chaîne latérale comprenant au moins cinq atomes de carbone.

Selon un mode de réalisation particulier, le premier ionomère présente avantageusement la structure suivante :

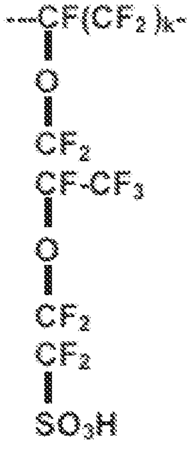

Dans la suite de la description, k s'entend comme un nombre entier.

De manière avantageuse, le second polymère associé au premier polymère se distingue par la longueur inférieure de sa chaîne latérale (« short side-chain »).

Un ionomère particulièrement adapté est un copolymère de tétrafluoroéthylène et de Sulfonyl Fluoride Vinyl, par exemple commercialisé sous le nom d'Aquivion® (Solvay), notamment sous le numéro CAS 111173-25-2.

La structure partielle d'un tel ionomère est illustrée à la figure 2 et se caractérise par des chaînes pendantes possédant 2 atomes de carbone. Ainsi et de manière avantageuse selon l'invention, le second ionomère perfluorosulfoné possède une chaîne latérale comprenant moins de cinq atomes de carbone.

Un tel second ionomère présente avantageusement la structure partielle suivante :

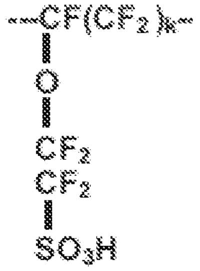

Comme il ressort, le mélange d'ionomères perfluorosulfonés selon l'invention est avantageusement constitué ou comprend avantageusement un polymère de type Nafion® et un polymère de type Aquivion®.
En d'autres termes et de manière avantageuse, la couche active selon l'invention comprend :

- un premier ionomère de structure :

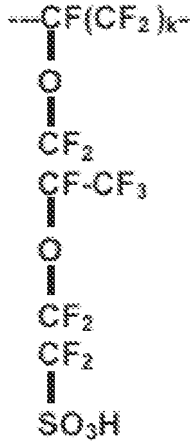

- et un second ionomère de structure :

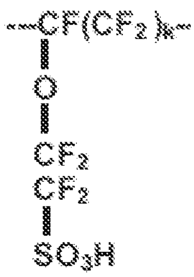

En effet et dans le cadre de l'invention, il a été montré que la combinaison de Nafïon® et d'Aquivion® dans les couches actives d'une pile, avantageusement dans sa cathode, exerçait une synergie et permettait d'augmenter les performances de la pile par rapport aux deux ionomères respectifs pris seuls. Ainsi, le mélange de deux ionomères de la famille des PFSA permet la mise en place d'une synergie qui conduit à des performances supérieures à chacun des deux ionomères seuls.
Par conséquent, les différentes combinaisons entre les PFSA disponibles peuvent être envisagées, notamment impliquant le Flemion® (Asahi Glass Company) ou l'Aciplex® (Asahi Chemical Company).
Dans le cadre de l'invention, le test avantageusement mis en oeuvre pour mettre en évidence une éventuelle synergie entre au moins deux ionomères perfluorosulfonés consiste à suivre les performances électrochimiques d'une cellule comprenant ces ionomères. Les performances se mesurent en suivant la tension délivrée en fonction du courant. Ce test est généralement mis en oeuvre dans les conditions souhaitables dans le domaine de l'automobile (Température : 80°C ; 50% d'humidité relative ; Pression : 1,5bar) mais peuvent être adaptées aux conditions de fonctionnement envisagées pour le dispositif électrochimique en présence.
De manière générale, le mélange d'au moins deux polymères au sens de l'invention est considéré comme

avantageux lorsque la tension est supérieure ou égale, pour un courant donné et dans des conditions données, à celle mesurée avec au moins l'un des ionomères utilisé seul, voire avec chacun des ionomères utilisés seuls. A performances égales, le prix des ionomères peut également être pris en considération. Ainsi et à titre d'exemple, le Nafïon® étant plus coûteux que l'Aquivion®, il peut être avantageux de mettre en oeuvre un mélange des deux, même si les performances du mélange sont du même ordre que celles du Nafion® seul.

Selon un autre aspect et de manière avantageuse, la concentration relative du premier ionomère (présentant avantageusement la chaîne pendante la plus longue et encore plus avantageusement de type Nafion®) par rapport aux ionomères totaux est supérieure ou égale à 50% en poids de matière sèche, avantageusement comprise entre 50 et 80%. La concentration relative du deuxième ionomère (présentant avantageusement la chaîne pendante la plus courte et encore plus avantageusement de type Aquivion®) par rapport aux ionomères totaux est alors inférieure ou égale à 50% en poids de matière sèche, avantageusement comprise entre 20 et 50% en poids de matière sèche. Dans le cadre de l'invention, la concentration s'entend donc comme la quantité en matière sèche d'un ionomère par rapport à la quantité totale d'ionomères (« ionomères totaux »).

Encore plus avantageusement, la concentration relative du premier ionomère est comprise entre 60 et 70% en poids de matière sèche, et la concentration relative du deuxième ionomère est comprise entre 30 et 40% en poids de matière sèche.

Ainsi et à titre d'exemple, le premier ionomère, comprenant avantageusement la structure :

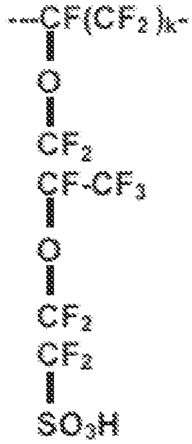

peut représenter 70% en poids du mélange d'ionomères, alors que le deuxième ionomère, comprenant avantageusement la structure :

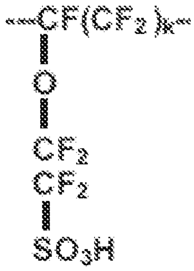

peut représenter 30% en poids du mélange d'ionomères.

Le test de performances mentionné ci-dessous peut être aisément mis en oeuvre par l'homme du métier au cas par cas pour déterminer, en présence d'un mélange d'ionomères perfluorosulfonés donné, la proportion avantageuse de chacun de ces ionomères.

Outre ce mélange d'ionomères perfluorosulfonés, une couche active selon l'invention comprend un catalyseur, avantageusement des nanoparticules de platine sur un support carboné, typiquement constituées de 50% de carbone et de 50% de platine (% massiques dans la couche catalytique sèche). De manière classique et à titre d'exemple, la couche active est constituée de 75% de catalyseur et de 25% d'ionomère(s) perfluorosulfoné(s).

Selon un autre aspect, l'invention concerne une encre catalytique comprenant au moins deux ionomères perfluorosulfonés tels que décrits ci-dessus.

Pour rappel, la couche catalytique peut être obtenue par dépôt de l'encre catalytique, notamment sur la membrane ou sur la couche de diffusion.

De manière classique, l'encre catalytique comprend, outre le mélange d'ionomères perfluorosulfonés selon l'invention et le catalyseur, avantageusement des nanoparticules de platine sur un support carboné, un solvant ou liquide porteur.

De manière connue de l'homme du métier, le dépôt d'une telle encre catalytique peut être réalisé par des méthodes d'impression telles que l'enduction, la pulvérisation, le jet d'encre, ou la sérigraphie.

Une couche active ou une encre catalytique telles que décrites ci-dessus peuvent être utilisées dans l'élaboration de dispositifs électrochimiques, comme des piles à combustible et plus particulièrement les piles à combustible à membrane échangeuse de protons (PEMFC), ou d'AME.

Ainsi, la présente invention vise également des dispositifs électrochimiques comprenant une couche active selon l'invention. Parmi les dispositifs électrochimiques visés figurent, en tout premier lieu, les piles à combustible et plus particulièrement les piles à combustible à membrane échangeuse de protons (PEMFC).

Selon un autre aspect de l'invention, une telle couche active peut être intégrée dans un assemblage membrane-électrodes ou AME, dans lequel elle joue le rôle d'électrode. Ainsi, une couche active selon l'invention peut aussi bien servir d'anode que de cathode, mais est avantageusement utilisée en tant que cathode.

Par définition, un AME selon l'invention comprend donc au moins :

- une membrane polymère ;
- une cathode constituée d'une couche active selon l'invention, c'est-à-dire comportant au moins deux ionomères perfluorosulfonés ;
- une anode éventuellement constituée d'une couche active selon l'invention.

De manière avantageuse, la membrane polymère est constituée d'un des deux ionomères perfluorosulfonés de la couche active, avantageusement du premier ionomère perfluorosulfoné de structure :

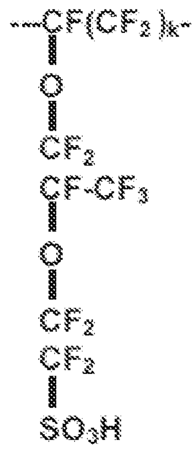

Dans le cas où l'anode ne comprend pas la couche active selon l'invention, elle est avantageusement constituée du même ionomère que la membrane, à savoir avantageusement l'un des deux ionomères perfluorosulfonés de la couche active, avantageusement du premier ionomère perfluorosulfoné de structure :

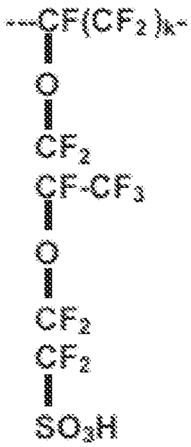

Un AME selon l'invention peut être intégré dans une pile à combustible, avantageusement dans une pile à combustible à membrane échangeuse de protons (PEMFC).
Comme démontré dans le cadre de la présente demande, une couche active selon l'invention permet d'améliorer les performances d'une pile à combustible de type PEMFC.

BREVE DESCRIPTION DES FIGURES

La manière dont l'invention peut être réalisée et les avantages qui en découlent ressortiront mieux de l'exemple de réalisation qui suit, donné à titre indicatif et non limitatif, à l'appui des figures annexées parmi lesquelles :

La figure 1 représente le schéma du principe de fonctionnement d'une pile à combustible de type PEMFC.
La figure 2 représente la structure des chaines pendantes d'ionomères perfluorosulfonés (à gauche Nafion®, à droite Aquivion®).
La figure 3 compare les performances d'un dispositif selon l'invention (mélange Aquivion® et Nafion®) et de dispositifs selon l'art antérieur (Aquivion® ou Nafion® seuls).

**MODES DE REALISATION DE L'INVENTION**

I/ Elaboration des dispositifs :

L'élaboration de l'AME (Assemblage Membrane-Electrodes) se fait suivant trois étapes :

- la première étape consiste à préparer l'encre catalytique, comprenant le(s) ionomère(s) et le catalyseur sur support carboné, dans un solvant.
- la seconde étape est la fabrication de l'électrode par dépôt de l'encre sur la couche de diffusion, suivant un procédé décrit ci-dessous.
- la dernière étape de fabrication est l'assemblage de deux électrodes (cathode et anode) avec au milieu une membrane généralement constituée du même polymère que l'un des ionomères présents dans la couche active.

***a/Dispositif selon l'invention :***

Selon l'invention, la composition de l'anode se différencie de celle de la cathode. Les pourcentages suivants s'entendent massique, dans la couche catalytique sèche :

L'anode est composée de 75% de catalyseur (contenant 50% de carbone et 50% de platine) et 25% d'ionomère.

La cathode est également composée de 75% du même catalyseur, de 18% du premier ionomère, préférentiellement le Nafion®, et de 7% du second ionomère, préférentiellement l' Aquivion®.
La membrane est une membrane de type Nafion®.
Une encre catalytique à base aqueuse est préparée afin d'obtenir ces concentrations. Suivant le procédé de fabrication, l'extrait sec varie de 1% à 20%. Un traitement thermique permet de sécher l'encre déposée.
L'assemblage de l'anode et de la cathode, avec au milieu une membrane, permet d'obtenir l'AME. Elle se

déroule dans une presse, suivant des conditions de température, de pression, et de durée, variables suivant la membrane utilisée.

L'AME ainsi obtenu, d'une surface de $25cm^2$, est monté dans une monocellule pour tester les performances. La monocellule est équipée de plaques monopolaires permettant l'arrivé des gaz, de plaques collectrices de courant, et de plaques de serrage.

La structure du Nafion® (fournisseur Dupont) et de l'Aquivion® (fournisseur Solvay) mis en oeuvre est illustrée à la figure 2.

***b/Dispositifs selon l'art antérieur (Nafion® seul ou Aquivion® seul) :***

Le protocole de fabrication d'un AME contenant un seul ionomère est le même que précédemment. La seule différence réside dans la fabrication de la cathode. Celle-ci est constitué des mêmes matériaux que l'anode, à savoir 75% de catalyseur, et 25% d'ionomère.

<u>II/ Performances des dispositifs:</u>

Les performances des dispositifs sont étudiées dans des conditions proches de celles recommandées pour une utilisation automobile.

La température de fonctionnement est de 80°C. L'humidité relative varie de 50% à 80%. La pression des gaz est de 1,5 bar.

Le test démarre par une mesure du potentiel d'abandon. Un courant est ensuite imposé, de 0 à 2 $A/cm^2$, et le potentiel mesuré. Le résultat est une courbe tension-courant représentative des performances de la pile.

Les résultats sont présentés à la figure 3. Dans les conditions de fonctionnement de la pile, le mélange Nafion® (70% en concentration) et Aquivion® (30% en concentration) permet de surpasser les performances du Nafion® seul.

**Revendications**

1. Couche active (2) pour pile à combustible à membrane échangeuse de protons (PEMFC) comprenant un catalyseur et au moins deux ionomères perfluorosulfonés, **caractérisée en ce que** le deuxième ionomère perfluorosulfoné présente une chaîne pendante plus courte que le premier ionomère perfluorosulfoné.

2. Couche active pour PEMFC selon la revendication 1, ***caractérisée*** **en ce que** le premier ionomère perfluorosulfoné présente la structure suivante :

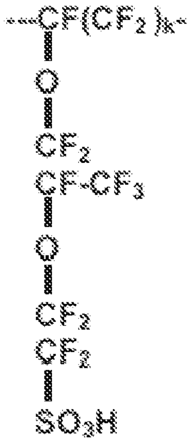

3. Couche active pour PEMFC selon l'une des revendications précédentes, ***caractérisée*** **en ce que** le deuxième ionomère perfluorosulfoné présente la structure suivante :

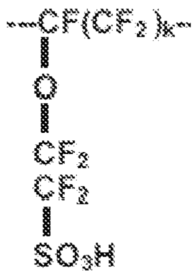

4. Couche active pour PEMFC selon l'une des revendications précédentes, ***caractérisée* en ce que** la concentration relative du premier ionomère est comprise entre 50 et 80% en poids de matière sèche, et la concentration relative du deuxième ionomère est comprise entre 20% et 50% en poids de matière sèche.

5. Couche active pour PEMFC selon la revendication 4, ***caractérisée* en ce que** la concentration relative du premier ionomère est comprise entre 60 et 70% en poids de matière sèche, et la concentration relative du deuxième ionomère est comprise entre 30 et 40% en poids de matière sèche.

6. Couche active pour PEMFC selon l'une des revendications précédentes, ***caractérisée* en ce que** le catalyseur se présente sous la forme de nanoparticules de platine sur un support carboné.

7. Encre catalytique destinée à l'élaboration d'une couche active selon l'une des revendications 1 à 6 comprenant un catalyseur et au moins deux ionomères perfluorosulfonés tels que définis dans l'une des revendications 1 à 5.

8. Encre catalytique selon la revendication 7, ***caractérisée* en ce que** le catalyseur se présente sous la forme de nanoparticules de platine sur un support carboné.

9. Encre catalytique selon la revendication 7 ou 8, ***caractérisée* en ce qu'**elle comprend en outre un solvant ou liquide porteur.

10. Assemblage membrane-électrodes (AME) dans lequel au moins l'une des électrodes, avantageusement la cathode, comprend une couche active selon l'une des revendications 1 à 6.

11. Assemblage membrane-électrodes (AME) selon la revendication 10 ***caractérisé* en ce que** la membrane, et éventuellement l'anode, est constituée d'un des deux ionomères perfluorosulfonés, avantageusement du premier ionomère perfluorosulfoné.

12. Pile à combustible de type PEMFC comprenant un assemblage membrane-électrodes (AME) selon la revendication 10 ou 11.

## Patentansprüche

1. °/Aktive Schicht (2) für eine Brenstoffzelle mit einer Protonenaustauschermembran (PEMFC), die einen Katalysator und mindestens zwei PFS-Ionomere umfasst, **dadurch gekennzeichnet, dass** das zweite PFS-Ionomer eine kürzere hängende Kette aufweist als das erste PFS-Ionomer.

2. °/ Aktive Schicht für eine PEMFC gemäß Anspruch 1, **dadurch gekennzeichnet, dass** das erste PFS-Ionomer folgende Struktur aufweist:

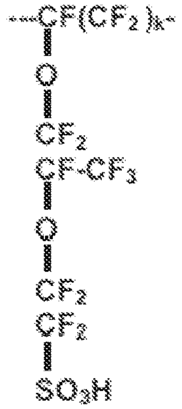

**3.** °/ Aktive Schicht für eine PEMFC gemäß einem der vorstehenden Ansprüche, **dadurch gekennzeichnet, dass** das zweite PFS-Ionomer folgende Struktur aufweist:

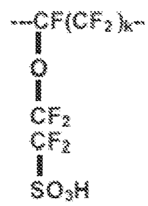

**4.** °/ Aktive Schicht für eine PEMFC gemäß einem der vorstehenden Ansprüche, **dadurch gekennzeichnet, dass** die relative Konzentration des ersten Ionomers zwischen 50% und 80% Trockengewicht liegt, und dass die relative Konzentration des zweiten Ionomers zwischen 20% und 50% Trockengewicht liegt.

**5.** °/ Aktive Schicht für eine PEMFC gemäß Anspruch 4, **dadurch gekennzeichnet, dass** die relative Konzentration des ersten Ionomers zwischen 60% und 70% Trockengewicht liegt, und dass die relative Konzentration des zweiten Ionomers zwischen 30% und 40% Trockengewicht liegt.

**6.** °/ Aktive Schicht für eine PEMFC gemäß einem der vorstehenden Ansprüche, **dadurch gekennzeichnet, dass** der Katalysator sich in der Form von Platin-Nanopartikeln auf einem Kohlenstoffträger präsentiert.

**7.** °/ Katalytische Tinte zur Herstellung einer aktiven Schicht gemäß einem der Ansprüche 1 bis 6, umfassend einen Katalysator und mindestens zwei PFS-Ionomeren wie in einem der Ansprüche 1 bis 5 definiert.

**8.** °/ Katalytische Tinte gemäß Anspruch 7, **dadurch gekennzeichnet, dass** der Katalysator sich in der Form von Platin-Nanopartikeln auf einem Kohlenstoffträger präsentiert.

**9.** °/ Katalytische Tinte gemäß Anspruch 7 oder 8, **dadurch gekennzeichnet, dass** sie zusätzlich ein Lösungsmittel oder eine Trägerflüssigkeit umfasst.

**10.** °/ Membran-Elektroden-Einheit, in welcher mindestens eine der Elektroden, vorteilhafterweise die Kathode, eine aktive Schicht gemäß einem der Ansprüche 1 bis 6 umfasst.

**11.** °/ Membran-Elektroden-Einheit gemäß Anspruch 10, **dadurch gekennzeichnet, dass** die Membran, und gegebenenfalls die Anode, aus einem der beiden PFS-Ionomeren, vorteilhafterweise aus dem ersten PFS-Ionomer besteht.

**12.** °/ Brennstoffzelle vom Typ PEMFC, umfassend eine Membran-Elektroden-Einheit gemäß Anspruch 10 oder 11.

## Claims

1. An active layer (2) for a proton-exchange membrane fuel cell (PEMFC) comprising a catalyst and at least two perfluorosulfonate ionomers, **characterized in that** the second perfluorosulfonate ionomer has a shorter dangling chain than the first perfluorosulfonate ionomer.

2. The active layer for a PEMFC of claim 1, wherein the first perfluorosulfonate ionomer has the following structure:

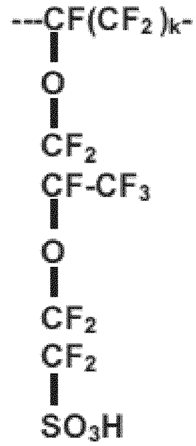

3. The active layer for a PEMFC of any of the foregoing claims, wherein the second perfluorosulfonate ionomer has the following structure:

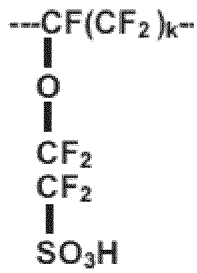

4. The active layer for a PEMFC of any of the foregoing claims, wherein the relative concentration of the first ionomer is in the range from 50 to 80% by weight of dry matter, and the relative concentration of the second ionomer is in the range from 20% to 50% by weight of dry matter.

5. The active layer for a PEMFC of claim 4, wherein the relative concentration of the first ionomer is in the range from 60 to 70% by weight of dry matter, and wherein the relative concentration of the second ionomer is in the range from 30 to 40% by weight of dry matter.

6. The active layer for a PEMFC of any of the foregoing claims, wherein the catalyst appears in the form of platinum nanoparticles on a carbonaceous support.

7. A catalytic ink intended for the forming of the active layer of any of claims 1 to 6 comprising a catalyst and at least two perfluorosulfonate ionomers such as defined in any of claims 1 to 5.

8. The catalytic ink of claim 7, wherein the catalyst appears in the form of platinum nanoparticles on a carbonaceous support.

9. The catalytic ink of claim 7 or 8, wherein it further comprises a solvent or carrier fluid.

10. A membrane-electrode assembly (MEA) wherein at least one of the electrodes, advantageously the cathode, comprises the active layer of any of claims 1 to 6.

**11.** The membrane-electrode assembly (MEA) of claim 10, wherein the membrane, and possibly the anode, is made of one of the two perfluorosulfonate ionomers, advantageously of the first perfluorosulfonate ionomer.

**12.** A PEMFC comprising the membrane-electrode assembly (MEA) of claim 10 or 11.

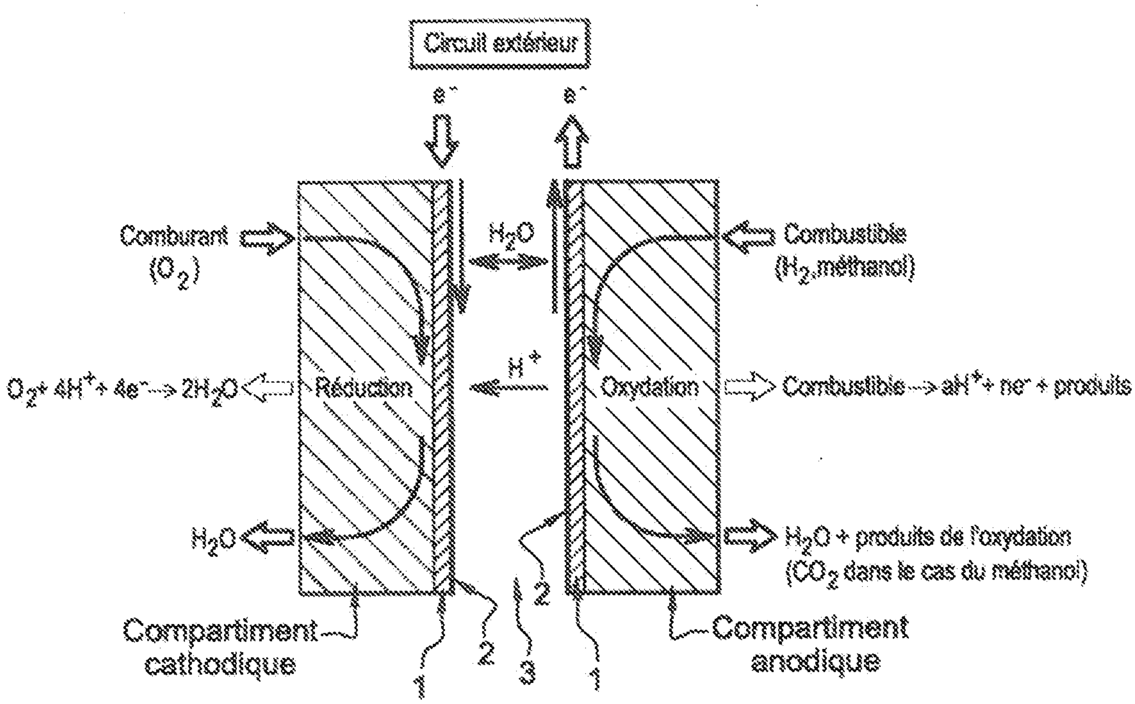


Figure 1

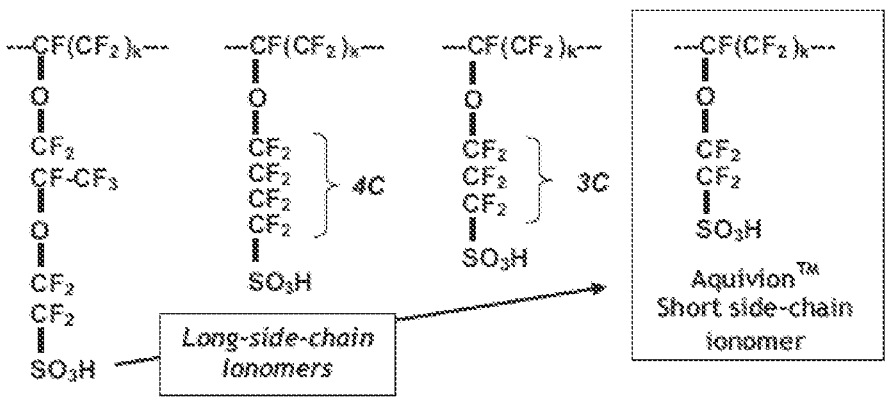


Figure 2

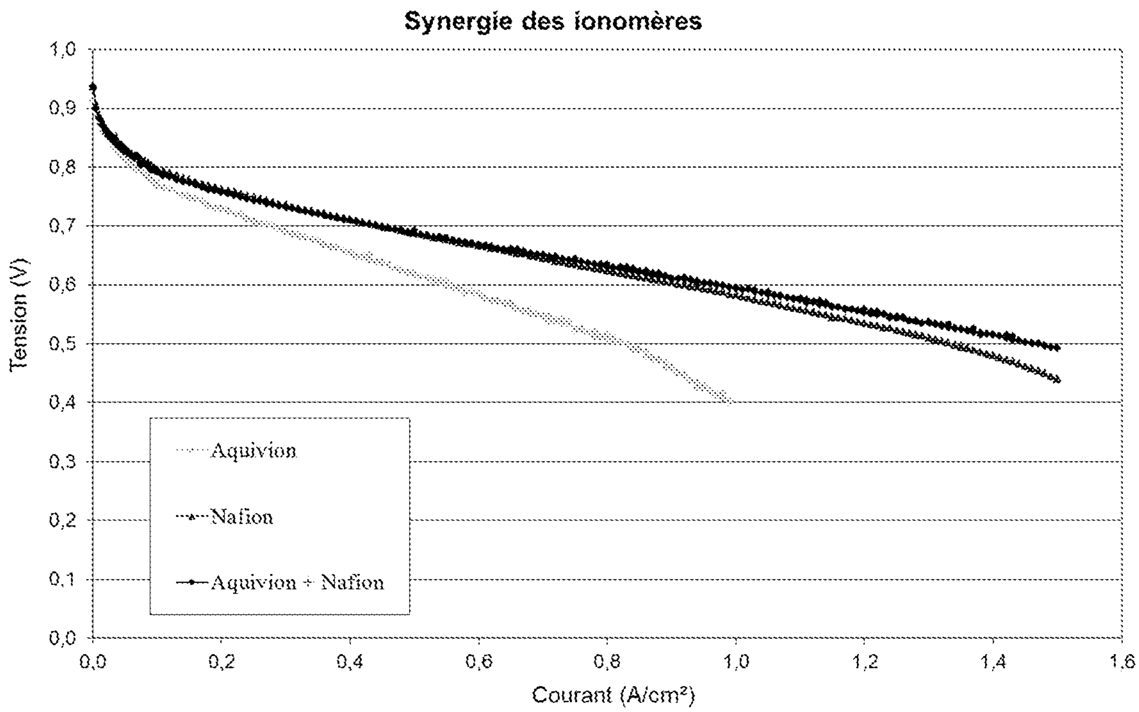
Synergie des ionomères
1,0
0,9
0,8
0,7
0,6
0,5
0,4
0,3
0,2
0,1
0,0
Tension (V)
Aquivion
Nafion
Aquivion + Nafion
0,0
0,2
0,4
0,6
0,8
1,0
1,2
1,4
1,6
Courant (A/cm²)

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1336996 A

### Littérature non-brevet citée dans la description

- **ARICO et al.** High temperature operation of a solid polymer electrolyte fuel cell stack based on a new ionomer membrane. *Fuel Cells,* 2010, vol. 10 (06), 1013-1023